# EUROPEAN PATENT APPLICATION

(11) **EP 4 804 081 A1**
(43) Date of publication of application: **09.09.2026**
(21) Application number: 26159141.6
(22) Date of filing: 17.02.2026
(51) Int. Cl.: G06N 3/045, G06F 40/284, G06N 3/09, G06N 20/10

(54) **CONTEXT-DEPENDENT GENERATION OF SUPPLEMENTAL INFORMATION ON A PER-LEVEL BASIS IN A NEURAL NETWORK**

(30) Priority: 01.03.2025 US 202519067898
(71) Applicant: Microsoft Technology Licensing, LLC, Redmond, WA 98052-6399 (US)
(72) Inventor: FAYYAZ, Mohsen, Redmond, 98052-6399 (US); SENGUPTA, Sunando, Redmond, 98052-6399 (US); SOMMERLADE, Eric Chris Wolfgang, Redmond, 98052-6399 (US)
(74) Representative: Murgitroyd & Company

(57) **Abstract**

A technique processes input information using a machine-trained model in a context-specific manner. The technique includes, for a particular processing block: receiving a set of input tokens; transforming the set of input tokens into a set of output tokens; and generating a control decision based on the output tokens. For a first state, the technique appends at least one of the output tokens to the input tokens to define a new set of input tokens and then repeats the transforming and generating operations. For a second state, the technique passes at least some of the set of output tokens to a next processing block. The token(s) passed to the next processing block convey supplemental information that does not necessarily have a verbal counterpart. The technique has the end effect of invoking transformation operations in a context-based as-needed basis, which, in turn, reduces latency and the consumption of resources.

## Description

### BACKGROUND

Some machine-trained models include a series of processing blocks that perform the same operation. For example, in the text-based domain, a transformer language model includes a series of transformer blocks that extract insight from a query at increasing levels of detail. While these types of machine-trained models are capable of generating high-quality responses to input examples, they are generally resource-intensive in nature. For instance, some language models have hundreds of billions of parameters. An execution platform requires a significant amount of storage capacity to store the parameters of a large language model, and a significant amount of memory and processor resources to then run the large language model. This hardware requirement restricts the universe of computing devices that are capable of locally running a language model.

### SUMMARY

The scope of the invention is in accordance with the appended claims.

A technique is described herein for processing input information using a machine-trained model in a context-specific manner. The machine-trained model includes a series of processing blocks. The technique includes, for a particular processing block: receiving a set of input tokens; transforming the set of input tokens into a set of output tokens; and generating a control decision based on the output tokens, the control decision having at least two selectable states. For a first state, the technique appends at least one of the output tokens to the input tokens to define a new set of input tokens and then repeats the transforming and generating operations. For a second state, the technique passes at least some of the set of output tokens to the next processing block in the series of processing blocks for processing.

The technique has the end effect of selectively repeating a transformation operation based on an assessed level of difficulty in interpreting an input token under consideration, which, in turn, depends on the complexity of an input query as a whole. For example, the technique decides to perform the transformation operation only once for an input token that is easy to interpret. The technique will decide to repeat the transformation operation one or more times for a token that is more difficult to interpret. Each iteration of the transformation operation produces supplemental information that improves the subsequent processing block's ability to correctly interpret the input tokens that are fed to it. Overall, the technique dynamically scales the total number of the processing operations it performs in a context-dependent and layer-dependent manner. As a consequence, the technique dynamically varies the depth of reasoning it performs over the latent space of the machine-trained model on a query-by-query and level-by-level manner.

The technique is resource-efficient because it selectively performs each additional transformation operation on an as-needed basis, dispensing with additional transformation operations when they are not needed to accurately interpret a particular input token. This contrasts with a strategy that invokes a fixed amount of resources for each processing block regardless of the complexity of the task it is given.

The technique also accommodates the use of individual processing blocks that have fewer parameters compared to conventional machine-trained models. Alternatively, or in addition, the technique accommodates the use of fewer processing blocks compared to conventional machine-trained models. This capability arises because the machine-trained model achieves its accuracy by repeating parameter-efficient transformation operations on a per-block basis, rather than building large transformer blocks that are capable of successfully interpreting queries of varying complexity in a single pass. Further note that the technique is capable of repeating each transformation operation without reloading the parameters used by this transformation operation, since they can be cached upon their first invocation. This factor, combined with the smaller number of parameters, improves the latency of the machine-trained model compared to conventional machine-trained models.

Further, the technique uses a single machine-trained architecture to achieve the above-summarized context-dependent performance. This approach is more time-efficient and resource-efficient compared to a technique that devotes separately trained machine-trained models to different types of queries.

In some implementations, the set of input tokens fed to a processing block includes an input control token. The transformation operation produces an output control token which is the transformed counterpart of the input control token. The technique decides whether to repeat the transformation based on the output control token. Upon a decision to cease repeating the transformation operation, the technique passes all output control tokens that have been generated so far (with the exception of the last-generated output control token) to the next processing block.

In some implementations, the supplemental information produced by each iteration of a transformation operation expresses insight that does not necessarily have a direct verbal counterpart. The generation of verbal and non-verbal information improves the machine-trained model's ability to reason about complex queries.

In some implementations, the machine-trained model is trained to reduce the differences between model-generated responses and ground-truth responses, while also penalizing the repetition of transformation operations. The penalization term encourages the machine-trained model to produce responses using only as many iterations of transformation operations that are necessary to achieve desired accuracy. Economizing the number of iterations also improves the latency performance of the machine-trained model.

The above-summarized technology can be manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

### BRIEF DESCRIPTION OF DRAWINGS

Fig. 1 shows a machine-trained model that incorporates per-level instances of decision logic that govern whether transformation operations are repeated or not.
Fig. 2 is a process that summarizes the operations performed in a particular processing block of the machine-trained model of Fig. 1.
Fig. 3 is a process that represents one implementation of the process of Fig. 2.
Fig. 4 is an example of operations performed by a particular processing block in accordance with the process of Fig. 3.
Fig. 5 shows one implementation of a control head, which is one component in the example of Fig. 4.
Fig. 6 is a training system for training parameters of the machine-trained model of Fig. 1.
Fig. 7 shows one implementation of the machine-trained model of Fig. 1, in which at least one processing block includes difference-based parameters.
Fig. 8 shows another implementation of the machine-trained model of Fig. 1, in which the processing blocks of the machine-trained model are organized in a manner specified by a directed graph.
Fig. 9 shows a processing block in a main root-to-leaf (RTL) path in the machine-trained model of Fig. 8.
Fig. 10 shows a processing block that is not a member of the main RTL path in the machine-trained model of Fig. 8.
Fig. 11 shows a transformer language model that includes a sequence of transformer blocks. The transformer language model is an example of the machine-trained model of Fig. 1.
Fig. 12 is a flowchart that describes a process of processing input information in a context-specific manner using the machine-trained model of Fig. 1.
Fig. 13 shows one or more computing devices for implementing the machine-trained model of Fig. 1.
Fig. 14 shows resources of a distributed system for implementing the machine-trained model of Fig. 1.
Fig. 15 shows an illustrative computing system that is used to implement any aspect of the features shown in the foregoing drawings.

The same numbers are used throughout the disclosure and figures to reference like components and features.

### DETAILED DESCRIPTION

### A. Overview of Machine-Trained Model

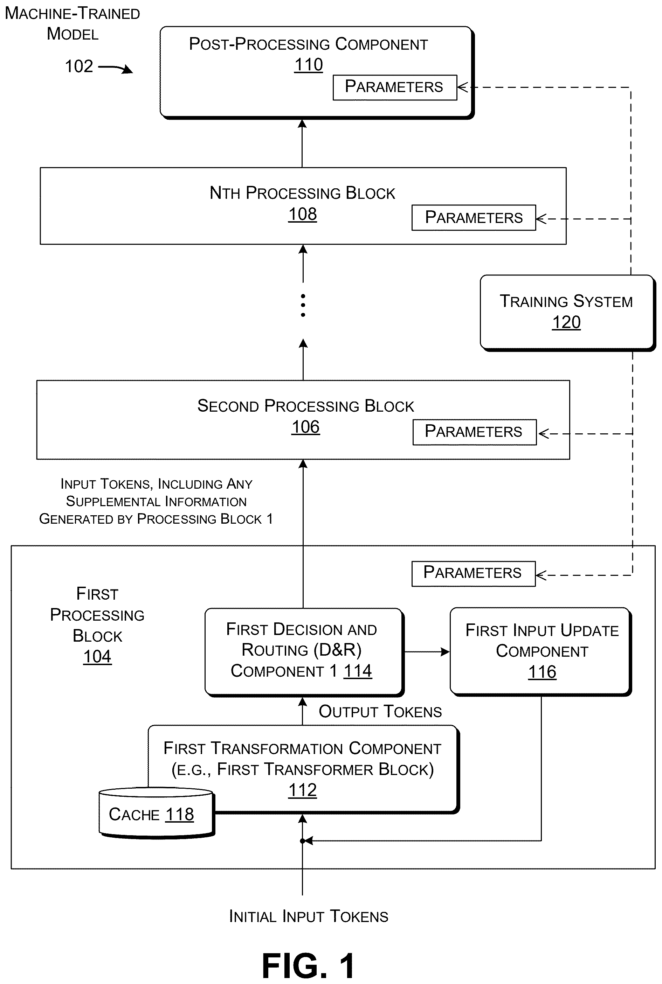

Fig. 1 shows an example of a machine-trained model 102 that includes a series of processing blocks (104, 106, ..., 108). In some implementations, the processing blocks (104, 106, ..., 108) perform the same operations at different levels of abstraction, often from broad to narrow. The output information generated by each processing block serves as input information for a next processing block (if any). A post-processing block 110 performs operations on a final instance of output information produced by the last processing block 108. For instance, the post-processing block includes a linear neural network layer followed by a Softmax component (that is, a normalized exponential function).

In some implementations, the machine-trained model 102 is a transformer language model, and the processing blocks (104, 106, ..., 108) are a series of transformer blocks. The transformer blocks perform the same attention-based operations, although they include different respective sets of machine-trained parameters. Further, as will be further clarified below, the last processing block 108 departs from the behavior of the prior processing blocks (104, 106, ...) to some extent. Section D provides additional information regarding one implementation of an illustrative transformer language model. In other implementations, the series of processing blocks (104, 106, ..., 108) perform different respective operations.

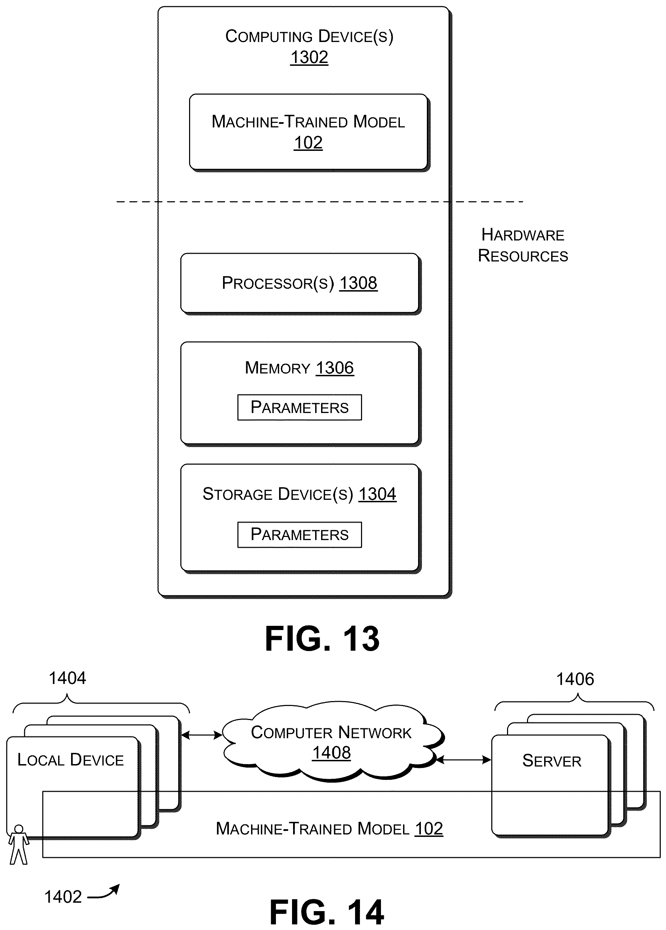

This section provides an overview of the machine-trained model 102. Later sections describe individual aspects of the machine-trained model 102 and its manner of operation. The following terminology is relevant to the description to follow. A machine-trained model or model refers to computer-implemented logic for executing a task using machine-trained parameters that are produced in a training operation. A parameter refers to any type of parameter value that is iteratively produced by the training operation, such as a filter weight or bias value. A token generally refers to a unit of information processed by a machine-trained model. The information associated with a token differs at different stages of processing. At the input to the machine-trained model, a token includes the text of a word, a fragment of a word, or other part of a content item (such as patch of an input image). In the context of the internal layers of the machine-trained model, a token is shorthand reference to a distributed vector (also referred to as an embedding) that represents the meaning of a piece of information. A prompt refers to a sequence of tokens submitted to a machine-trained model. In some contexts, terms such as "component," "module," "engine," and "tool" refer to parts of computer-based technology that perform respective functions. Figs. 13-15, described below, provide examples of illustrative computing equipment for performing these functions.

Fig. 1 shows the components of the first processing block 104. The other processing blocks include the same set of components (with the exception of the last processing block 108), although the components of different processing blocks are instantiated by different respective sets of parameters. The first processing block 104 receives an initial set of input tokens. The set of input tokens represents, in part, input information having any type or combination of content types. For example, each of the set of input tokens represents a word or part of a word in a query, input sentence, document, or other text-based item. In other implementations, the set of input tokens describe an image, a video, or an instance of audio information. Alternatively, the machine-trained model 102 is a multi-modal model that receives any combination of textual, image, video, and/or audio content, etc. To facilitate explanation, however, it will henceforth be assumed the input information represents linguistic information.

A transformation component 112 maps the set of input tokens to a set of output tokens. A decision and routing (D&R) component 114 determines, on the basis of the output tokens, whether the transformation operation performed by the transformation component 112 should be repeated. If this inquiry is answered in the affirmative, then an input update component 116 appends at least one output token to the set of input tokens, and feeds the modified set of input tokens to the transformation component 112. The transformation component 112 then predicts a next output token in a sequence of tokens based on the modified set of input tokens. When the transformation component 112 repeats its transformation operation, it can use cached parameters applied in the prior transformation operation, which avoids the needs to reload the parameters. The transformation component 112 also reuses intermediate calculation results that have been cached, e.g., in the key-value (KV) cache of a transformer block. A cache 118 represents one or more caches that serve the above roles.

On the other hand, if the D&R component's query is answered in the negative, then the D&R component 114 feeds at least some of the output tokens to the second processing block 106, where they henceforth assume the role of input tokens to the second processing block 106.

The decision of whether or not to repeat the transformation operation performed by the transformation component 112 depends on a level of complexity of a set of input tokens, which, in turn is reflected in information encoded by the output tokens. More particularly, the decision of whether or not to repeat the transformation operation depends on the difficulty of the task of predicting a next token under consideration. The complexity of the input tokens, in turn, depends on the complexity of the prompt that is fed to the first processing block 104. For a set of input tokens that is relatively easy to interpret, the D&R component 114 may conclude that a single pass through the transformation component 112 is sufficient. For a set of input tokens that is more difficult to interpret, the D&R component 114 may conclude that plural passes through the transformation component 112 are appropriate. Each pass generates supplemental information regarding the set of input tokens, which, in turn, facilitates the interpretation of the set of input tokens in subsequent processing blocks. Section B will provide an example of how this supplemental information is expressed.

The concept of "complexity" depends on plural context-specific factors. For example, the query "Which baseball team has more world series titles: the Yankees or the Mets?" is a relatively simple query because it asks the machine-trained model 102 to choose between two given discrete options, where the criterion for evaluation is well defined. The task of predicting each of this query's tokens is therefore relatively easy. The query "What baseball team has the most devoted fans?" is more complex. This is because the query involves a larger number of variables, and the criterion for evaluation ("devotion") is less quantifiable than the first query. The task of predicting this query's individual tokens will therefore be more complex than the first query.

More specifically, in some cases, a prompt fed to the first processing block 104 includes tokens that express a general instruction (provided in a system prompt part of the prompt), a current query, and context-related information. For example, the context-related information describes a portion of a dialogue that precedes the current query. Therefore, any reference herein to the complexity of a particular query is meant to encompass those cases in which the prompt expresses the query together with task-related information and context-related information. This is relevant to note because the complexity of a current query may stem from the fact that it asks a difficult question in the context of a particular ongoing dialogue.

In practice, the complexity level of a set of input tokens is determined by the machine-trained parameters of the processing block 104, including the parameters of the transformation component 112. These parameters, in turn, are iteratively produced by a training system 120 based on a set of training examples. The training system 120 treats the loss computed for a training example as a proxy for the complexity of the training example. For a high loss, the training system 120 concludes that it is appropriate to repeat a transformation operation to gain more insight regarding the particular training example, to thereby lower the loss in a subsequent training cycle.

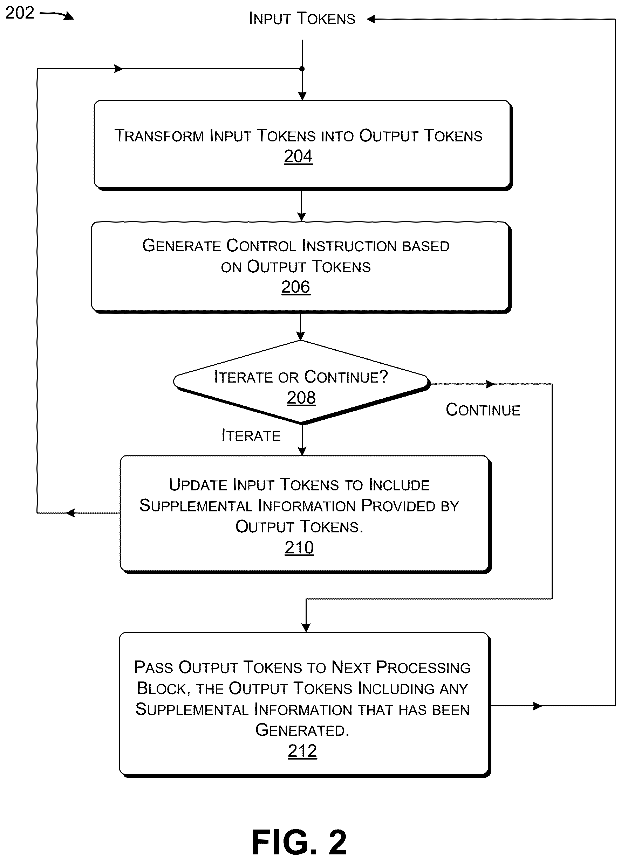

Fig. 2 is a process 202 that summarizes one manner of operation of a particular processing block of the machine-trained model 102 of Fig. 1 (other than the last processing block 108). For example, the process 202 describes the behavior of the processing block 104. In block 204, the processing block transforms a set of input tokens into output tokens. A "token" in this context is shorthand reference for a distributed vector (an embedding) that represents a piece of information. In block 206, the processing block generates a control instruction based on the output tokens, with emphasis on a current token being predicted. As shown in block 208, the control instruction has one of two states: iterate or continue. In block 210, for an instruction to iterate, the processing block updates the set of input tokens to include supplemental information provided by the output tokens. The process flow then returns to block 204, where the processing block transforms the updated set of input tokens into output tokens. The updated set of output tokens includes the previous output tokens followed by a new predicted output token. In block 212, for an instruction to continue, the processing block passes at least some of the output tokens to a next processing block. The output tokens include any supplemental information that has been generated over the plural iterations. In some implementations, the supplemental information excludes the instance of supplemental information generated in the last iteration.

In some implementations, the machine-trained model 102 operates autoregressively. "Autoregressive" means that the machine-trained model 102 generates one output token at a time. At the end of each pass, the machine-trained model 102 appends the newly generated output token to the end of the previous set of input tokens that are fed to the machine-trained model 102.

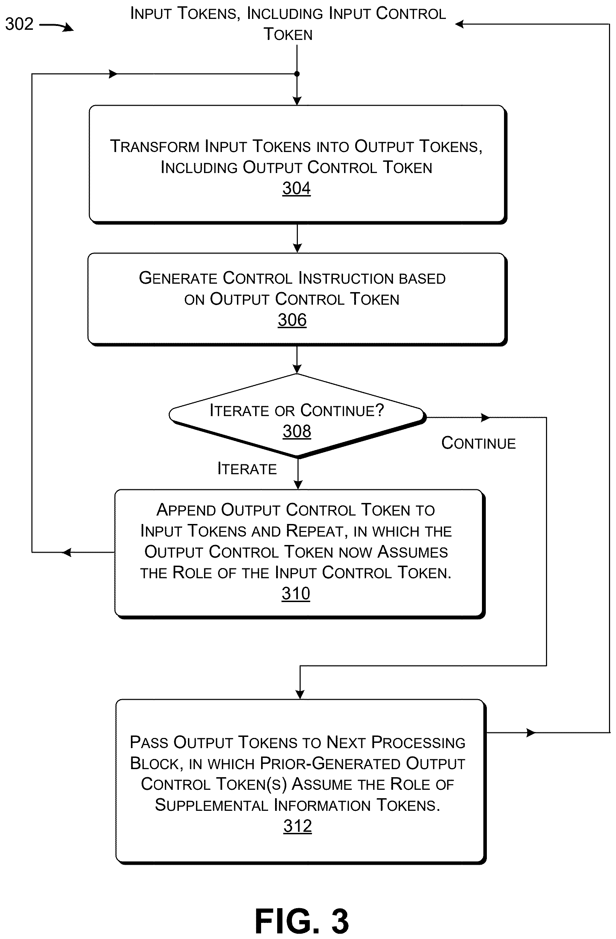

The above explanation of autoregression describes the behavior of the machine-trained model 102 on a macro level, when viewed from the perspective of the input and output of the machine-trained model 102 as a whole. Each individual processing block also performs its iterations (if any) in an autoregressive manner. That is, for each iteration, the processing block (1) predicts a new output token based input tokens fed to the processing block; (2) appends the output token to the end of prior set of input tokens, to produce a modified set of input tokens; and (3) passes the modified set of input tokens to the processing block. In this context, block 206 focuses on the difficulty associated with predicting the next token under consideration. Information encoded in the one or more output tokens serves as a proxy for the difficulty of predicting the next token. Fig. 3 (below) will describe an implementation in which the assessment is made on the basis of the last-generated output token.

Each processing block includes a prescribed number of parameters. The prescribed number of parameters is sufficient to accurately interpret a set of input tokens having low complexity in a single pass, but may provide less accurate results for a set of input tokens of greater complexity. To address this shortcoming, a processing block repeats its transformation operation one or more times for a complex query, each time adding supplemental information that assists in interpreting the set of input tokens.

In summary, the machine-trained model 102 dynamically scales the total number of transformation operations it performs in each processing block (other than the terminal processing block 108) based on the complexities of the tokens presented to the processing block. Increasing the number of iterations over the processing blocks expands the processing capability of the machine-trained model 102, e.g., by effectively adding more layers to the machine-trained model 102. It also increases the amount and depth of reasoning that the machine-trained model 102 performs over the latent space of the machine-trained model 102. Decreasing the number of iterations reduces the processing capability and the depth of reasoning that is performed over the latent space.

The machine-trained model 102 as a whole makes efficient use of resources for various reasons. First, as explained above, each processing block other than the last processing block 108 selectively scales its transformation operations based on the complexity of the input tokens presented to the processing block. As a result, the machine-trained model 102 will avoid performing a transformation operation that is not necessary for a particular set of input tokens, thereby reducing the amount of resources it expends on unnecessary processing. Second, the machine-trained model 102 is capable of devoting a smaller number of machine-trained parameters to each processing block because it achieves accuracy by reusing a set of parameters in each processing block if necessary. This is in contrast to a large machine-trained model that uses enough parameters in each block to accurately process even the most complex queries in a single pass. Third, the machine-trained model is capable of using a smaller number of processing blocks than other machine-trained models. This stems from the same characteristic described above: accuracy is achieved by reusing parameters, not by expanding the total number of parameters in a machine-trained model.

The above parameter-based savings lead to efficient use of storage capacity and memory. For instance, the technique enables a computing device to reduce the amount of storage capacity that is needed to store a machine-trained model 102. Further, the technique enables the computing device to reduce the amount of memory and processor resources that it needs to run the machine-trained model 102. Further, the technique enables the computing device to reduce the number of transactions involving the memory by eliminating the repetition of the transformation operation for sets of input tokens of low complexity. And even when the computing device repeats a particular transformation operation, it only needs to retrieve the parameters for this transformation operation once, because these parameters have been cached. Likewise, a processing block is capable of caching intermediate calculation results and reusing them upon iterating a transformation operation. These transaction characteristics also improve the latency of the machine-trained model 102.

The increased resource-efficiency of the machine-trained model 102 expands the universe of computing devices that are capable of storing and running the machine-trained model in local fashion. For example, some user computing devices having relatively modest memory and processing resources are capable of storing and running the machine-trained model 102. Further, in some implementations, a developer produces a single machine-trained model to serve execution platforms having different resource capabilities. The single machine-trained model is capable of running on even resource-constrained computing devices because of its use of an economical set of parameters, as set forth above. The production of a single machine-trained model reduces training and maintenance costs associated with the machine-trained model. That is, training and maintaining a single machine-trained model 102 is more resource-efficient and time-efficient compared to an alternative approach of developing different machine-trained models to handle different types of queries.

### B. Example

Fig. 3 shows a process 302 that represents one implementation of the process 202 of Fig. 2, applying to all but the last processing block 108 (which exhibits a behavior that departs from the prior processing blocks to some extent). The description of Fig. 3 will draw a distinction between a first tokens and second tokens. Each first token and each second token is a distributed vector.

In the text processing domain, the first tokens are transformed counterparts of linguistic input tokens that are fed to a first processing block 104 of the machine-trained model 102, selected from a predefined vocabulary of tokens. That is, the first tokens are transformed counterparts of linguistic input tokens produced by a tokenizer, in some cases, based on a submitted query. The second tokens are control tokens that serve two purposes. First, in some contexts, the control tokens convey information on the basis of which the D&R component 114 determines whether to repeat a transformation operation. Second, in other contexts, the control tokens express supplemental information that extends beyond the linguistic-derived information contained in the first tokens.

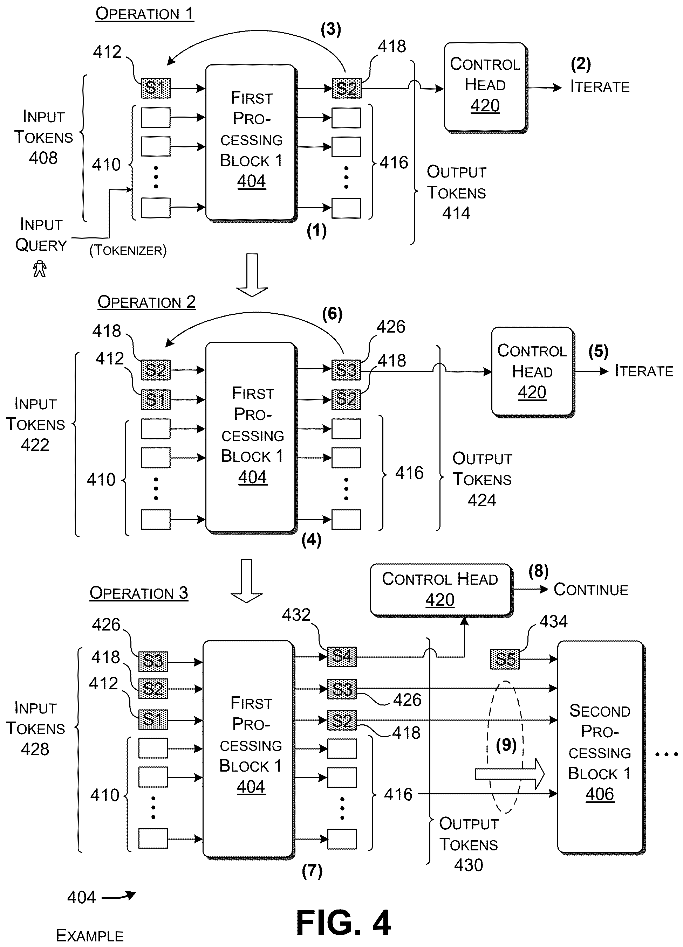

The supplemental information does not necessarily have a direct linguistic counterpart. In other words, a control token may express non-verbal insight about the first tokens that cannot be directly translated into a discrete set of linguistic tokens. For this reason, these tokens may be referred to as soft tokens or thought tokens. The control tokens generated by a particular processing block, when passed to a subsequent processing block, enable the subsequent processing block to more effectively reason about a problem posed by the input query. The meaning of the first tokens and the second (control) tokens will be clarified below in the context of the description of the example of Fig. 4.

The machine-trained model's use of these types of tokens differs from conventional machine-trained models that reason about a problem primarily in the verbal domain, e.g., focusing on that part of a vector space devoted to expressing linguistic tokens. The use of soft or thought tokens encourages the machine-trained model 102 to reason about a problem, when deemed appropriate, in a way that cannot be directly articulated with linguistic tokens. By repeating a transformation operation, the machine-trained model 102 deepens its potentially non-verbal reasoning about a problem in its latent space.

In block 304, a particular processing block (such as the first processing block 104 of Fig. 1) transforms a set of input tokens into a set of output tokens. The set of input tokens includes first input tokens and at least one input control token. The set of output tokens includes first output tokens that are counterparts of the respective first input tokens, and at least one output control token that is a counterpart of the at least one input control token. The at least one input control token and the at least one output control token are described in the singular below to facilitate explanation.

In block 306, the processing block generates a control instruction on the basis of the output control token. As indicated in block 308, the control instruction has one of two states: iterate or continue.

More specifically, in block 310, for the iterate state, the processing block appends the output control token to the prior set of input tokens, to produce a modified set of input tokens. The output control token assumes the role of an input control token in the context of the modified set of input tokens. The process flow then advances to block 304, upon which the transformer block generates a next predicted token based on the modified set of input tokens.

In block 312, for the continue state, the processing block passes at least some of the output tokens to a next processing block. More specifically, consider the example in which the process 302 repeats block 304 one or more times. At each iteration, block 304 produces an output control token that expresses supplemental information that extends beyond the information expressed in the first output tokens. In block 312, the processing block passes all of the output control tokens that have been generated over the plural iterations to the next processing block. In some implementations, however, the processing block excludes the last-generated output control token from the output control tokens that are passed to the next processing block.

The supplemental information conveyed by the output control token(s) assists the next processing block in correctly interpreting the set of input tokens that are fed to it. However, if the decision is made to continue after performing only a single transformation operation, the tokens fed to the next processing block will include no supplemental information generated by the previous processing block.

As will be clarified below, the last processing block 108 and post-processing component 110 differ from the prior processing by predicting a next linguistic token based on the input tokens that are fed to the last processing block 108. In an autoregressive mode, the machine-trained model 102 appends this linguistic token to the end of the sequence of linguistic tokens fed to the machine-trained model 102 in the prior pass. The machine-trained model 102 also appends all of the control (thought) tokens that have been produced in the prior pass to the sequence of input tokens. Further note that the post-processing component 110 does not convert the control (thought) tokens into linguistic tokens; rather, these control (thought) tokens continue to play a support role in the generation of a response, e.g., by ultimately assisting in the generation of a next linguistic token in the last processing block 108.

Fig. 4 shows an example 402 of the process 302 of Fig. 3 over three stages identified as operation 1, operation 2, and operation 3. Assume that a processing block 404 represents the first processing block 104 of Fig. 1, and a processing block 406 represents the next processing block 106 in a sequence of processing blocks (but not the past processing block 108). The numbers in parentheses (e.g., (1), (2), (3), etc.) represent a sequence of suboperations that are performed within the three main operations. Note that the particular decisions made in this example are illustrative and context-dependent; other decisions will be appropriate for another example. Further, Fig. 4 is a simplified depiction of the more encompassing processing performed on an input query.

In block operation 1, the processing block 404 receives a set of input tokens 408 that includes first input tokens 410 and an input control token S1 412. The first input tokens 410 derive from linguistic information in the input information. For example, a tokenizer produces the first input tokens 410 based on the input information. The input control token S1 412 serves a control-related role, to be clarified below. In some implementations, the input control token S1 is a distributed vector that is trained by the training system 120. In other words, the value of the control token S1 is fixed by the training system 120.

The processing block 406 transforms the set of input tokens 408 into a set of output tokens 414. The set of output tokens 414, in turn, includes first output tokens 416 that are transformed counterparts of the first input tokens 410, and an output control token S2 418 that is a transformed counterpart of input control token S1 412. In other words, in the context of inter-block autoregression, the processing block 406 predicts the control token S2 418 as the token which follows the first output tokens 416.

A control head 420 is a neural network of any type that serves the role of the decision logic of the D&R component 114 of Fig. 1. In the example 402, the control head 420 maps the output control token S2 418 to an instruction to iterate. This causes the processing block 404 to append the output control token S2 418 to the previous set of input tokens 408, to yield an updated set of input tokens 422. The output control token S2 418 is reinterpreted as an input control token in its new role within the updated set of input tokens 422.

In the second operation, the processing block 404 transforms the updated set of input tokens 422 into a set of output tokens 424. The updated set of input tokens 422 includes the same first input tokens 410, the same input control token S1 412, and the input control token S2 418. The output control tokens include the same first output tokens 416, the same output control token S2, and a newly-predicted output control token S3 426 that is the counterpart of the input control token S2 418.

The control head 420 again maps the output control token S3 426 to an instruction to iterate. This causes the processing block 404 to append the output control token S3 426 to the previous set of input tokens 422, to yield an updated set of input tokens 428. The output control token S3 426 is reinterpreted as an input control token in its new role within the updated set of input tokens 428.

In the third operation, the processing block 404 transforms the updated set of input tokens 428 into a set of output tokens 430. The updated set of input tokens 428 includes the same first tokens 414 and the input control tokens S1 412, S2 418, and S3 426. The output tokens 430 includes the same first output tokens 416 and same output control tokens S2 418 and S3 426, and a newly-predicted output control token S4 432. The output control token S4 432 is the transformed counterpart of the input control token S3 426.

The control head 420 maps the output control token S4 432 to an instruction to continue. In response, the processing block 404 forwards the first output tokens 416, the output control token S2 418, and the output control token S3 426 (but not the last-generated control token S4 432) to the next processing block 406. More specifically, the set of input tokens fed to the second processing block 406 includes the above-mentioned tokens and a new input control token S5 434. The new input control token S5 434 is a distributed vector that is trained by the training system 120 for use by the second processing block 406.

Although not shown, the second processing block 406 repeats the analysis that was performed by the first processing block 404, as does each subsequent processing block up to the last processing block. In general, any processing operation for these non-terminal processing blocks can be repeated zero, one, or more times. Each instance of output tokens passed to a subsequent processing block includes zero, one, or more instances of supplemental information expressed by respective output control tokens.

Consider now the operation of the last processing block (not shown) in the series of processing blocks. For example, the last processing block corresponds to processing block 108 in Fig. 1. The last processing block, operating in conjunction with the post-processing component 110, predicts the next linguistic token of a response. The last processing block performs this task based on all of the input tokens (including control or thought tokens) that have been fed to it from the previous processing blocks. But unlike the previous processing blocks, a new machine-trained control token (the equivalent of control tokens S1 and S5) is not appended to the input tokens that are fed to the last processing block.

After predicting the next linguistic token, the machine-trained model 102 appends this linguistic token, together with any control (thought) tokens produced in the last pass, to the end of the sequence of input tokens that have been fed to the machine-trained model 102 in the last pass. ("Pass" in this context refers to a complete pass through all of the processing blocks.) Alternatively, the machine-trained model 102 ends its response upon the prediction of a stop token. In some implementations, at no point will the machine-trained model 102 convert a control (thought) token to a linguistic counterpart. Rather, the control (thought) tokens continue to serve as vehicles for reasoning in the latent space, which ultimately provides assistance in the prediction of the next linguistic token in the last processing block.

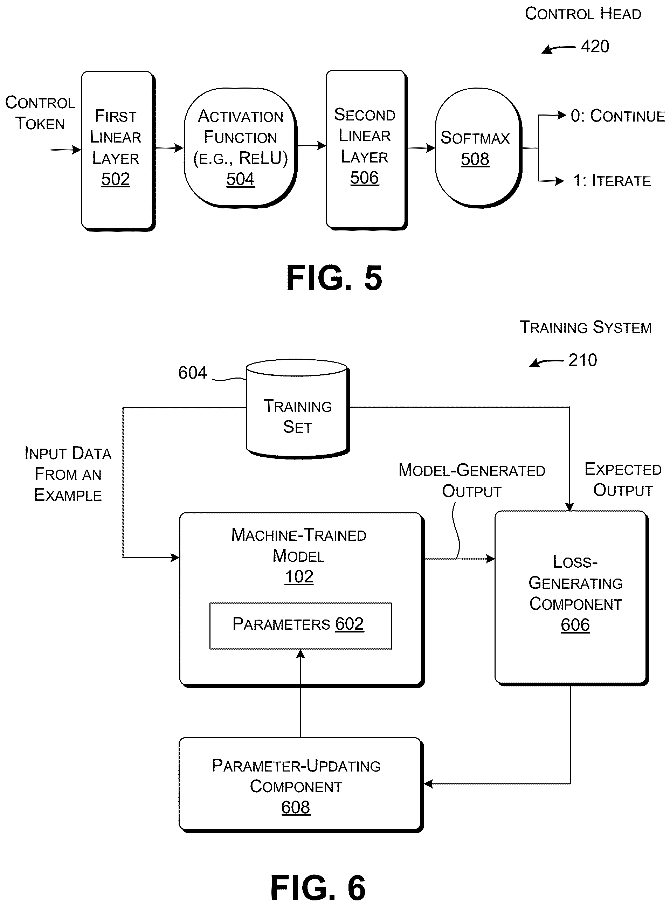

Different implementations implement the control head 420 using different respective neural networks and/or other processing logic. Fig. 5 shows one implementation of the control head 420 of Fig. 4 that uses a multilayer perceptron (MLP). The control head 420 includes, in order, a first linear layer 502, an activation function (e.g., ReLU) 504, a second linear layer 506, and a Softmax function 508. Together, these components map an output control token produced by a processing block to a binary result that indicates whether iteration is to be performed or not. Other implementations use other types of models and/or combinations of models for the control head 420, including transformer-based models, convolutional neural networks, other types of feed-forward neural networks, etc. Alternatively, or in addition, other implementations make a control decision based on additional output tokens and/or other contextual information (in addition to, or in place of, the last-generated control token)

### C. The training System

Fig. 6 shows an overview of the training system 120 for training the parameters 602 of the machine-trained model 102. The parameters 602 include attention weights, bias parameters, etc. The parameters 602 also include the values of the per-block input control tokens fed to respective processing blocks of the machine-trained model. For instance, in the example of Fig. 4, the parameters 602 include the values of input control tokens (S1, S5) fed into the first and second processing blocks (404, 406).

A data store 604 provides a set of training examples. For example, the training examples include respective passages of text. When the machine-trained model is trained to predict the next word, the passages of text encapsulate both the input data fed to the machine-trained model 102 and the ground-truth responses.

In some implementations, the training system 120 trains the parameters from scratch, that is, in which the parameters are initially given arbitrary values. In other cases, training commences with a pretrained version of the machine-trained model 102. A generative model is typically pretrained by performing unsupervised training using language modeling (e.g., predicting the next word in a given text passage and comparing the prediction with the actual next word) and by performing supervised training (e.g., predicting an output result and comparing the prediction with a ground-truth result). Background information on the general task of pretraining generative language models is provided in Radford, et al., "Improving Language Understanding by Generative Pre-training," OpenAI, San Francisco California, June 11, 2018, 12 pages. One example of a publicly available pre-trained language model is described in Touvron, et al., "LLaMA: Open and Efficient Foundation Language Models," arXiv, arXiv:2302.13971v1 [cs.CL], February 27, 2023, 27 pages. Another example of a publicly available pretrained language model is described in Abdin, et al., "Phi-3 Technical Report: A Highly Capable Language Model Locally on Your Phone," arXiv, arXiv:2404.14219v4 [cs.CL], August 30, 2024, 24 pages

The machine-trained model 102 operates autoregressively on a token-by-token basis. For each pass, the machine-trained model 102 attempts to predict a next linguistic token in a passage based on the preceding tokens that have been predicted. A loss-generating component 606 compares the difference between the model-generated prediction of the next linguistic token with the known next token given by the training example. In some implementations, the loss-generating component 606 measures the difference using cosine similarity or other distance metric. Over a batch of training examples, the loss-generating component 606 expresses the loss using any loss function, such as cross entropy, KL divergence, etc. A parameter-updating component 608 updates the parameters 602 based on the loss. In some implementations, the parameter-updating component 608 performs its updating using stochastic gradient descent in combination with back propagation.

In some implementations, the loss function applied by the loss-generating component includes an extra term to penalize the iteration state over the continuation state. This ensures that each processing block will favor choosing the iteration state, unless iteration proves necessary to correctly interpret a set of input tokens. More specifically, the loss function is given by: $Loss = ModelLoss + {\sum }_{j} {NumberOfIterations}_{j}$

*ModelLoss* expresses the difference between model-predicted linguistic tokens and ground-truth tokens. That is, *ModelLoss* depends on the linguistic tokens produced by the last processing block of the machine-trained model 102, not on the thought tokens which may have been predicted during any pass. *NumberOfIterationsⱼ* represents the number of iterations performed for the *jth* processing block of the machine-trained model 102. For example, *NumberOfIterationsⱼ* is three for the first processing block 404 of the example 402 of Fig. 4 because the first processing block 404 is invoked three time to generate two thought tokens (S2, S3) that are sent to the next processing block 406, along with the first output tokens 416.

The *NumberOfIterations* can be expected to have an inverse effect on *ModelLoss.* As *NumberOfIterations* increases, the amount of supplemental information that has been generated to assist interpretation grows, which, in turn, decreases *ModelLoss.* Minimizing using Equation (1) achieves a balance between economy of iterations and accuracy. In many cases, a high *ModelLoss* for difficult examples will force the training system 120 to increase the number of iterations performed for these examples.

Overall, the training system 120 produces a machine-trained model 102 that is capable of generating an accurate response by progressively converging on the correct response over a series of transformation operations. The training focuses on helping the machine-trained model 102 learn the residual between its current understanding of a problem and the next more complete understanding of the problem. This approach is not only more resource efficient than a single-pass approach, but often produces more accurate responses compared to the single-pass approach. This is because it is more effective to learn the residuals than a set of parameters that enables the direct single-pass understanding of a problem.

### D. Illustrative Variations

This section describes variations to the functionality described in Sections A-C. The iterations are to be understood as illustrative, not exhaustive. Further, any two or more variations can be combined in a single iteration.

### a) Applying Principles to Other Types of Models

Sections A-C described the processes (202, 302) of Figs. 2 and 3 in the context of a machine-trained language model, such as a transformer language model. Other implementations apply the principles described herein to other neural networks having plural layers or blocks. Generally, the principles described herein are applicable to any machine-trained model that processes input information in which there is some dependency among the parts of the input information. Further, as previously stated, the principles set forth herein are applicable to processing any content type or combination of content types.

### b) Expressing Control Instructions and Supplemental Information

Other variations express the control instructions and supplemental information in a different manner that is set forth in Sections A-C. For instance, Sections A-C set forth the example in which a unique machine-trained input control token is fed to each processing block of the machine-trained model 102, other than the last processing block 108. In other implementations, the training system 120 trains a single universal input control token that is used for all of the processing blocks of the machine-trained model 102, other than the last processing block 108.

Sections A-C also described the example in which, in a first context, the control tokens serve the role of controlling the number of iterations to be performed, and, in a second context, serve as a vehicle for passing supplemental information to a next processing block. In other implementations, the machine-trained model uses separate types of tokens to handle these two roles.

### c) Controlling the Number of Iterations that are Performed

Sections A-C described the example in which the number of iterations that are performed (if any) of each processing block depends on the complexity of the set of input tokens that is fed to the processing block, which is reflected in the output control token that is generated by the processing block. Other implementations control the number of iterations based on additional criteria. For example, another implementation includes a scaling factor that adjusts the probability that an iteration is performed based on the amount of resources available to the machine-trained model 102, including memory resources and processor-related resources. This implementation, for instance, reduces the number of iterations when a computing device cannot devote sufficient resources to the execution of the machine-trained model 102. Alternatively, or in addition, an implementation includes a scaling factor that adjusts the probability that an iteration is performed based on the criticality of providing low-latency responses. This implementation, for instance, reduces the number of iterations for an application that demands near-real-time responses to input queries. In some implementations, a configuration interface allows a user to explicitly select a scaling factor.

In other implementations, the training system 120 learns special tokens associated with different resource capabilities, such as a Large Capacity token, a Medium Capacity token, and a Small Capacity token. During inference, the machine-trained model 102 identifies the resource capabilities of a computing device, selects the appropriate resource-capability token, and appends this token to the input tokens fed to the initial processing block or all processing blocks. Each processing block chooses a number of iterations that depends on the complexity of the input set of tokens and the resource-capability token.

In other implementations, the training system 120 produces a set of different machine-trained models that are configured to operate in environments having different resource capabilities and/or different latency expectations. A model selector (not shown) assesses the characteristics of a particular execution environment and then selects the version of the machine-trained model 102 that is suitable for this execution environment.

### d) Expanding Instructions

In the examples described above, the D&R component 114 chooses between two states: iterate or continue. In other examples, the D&R component 114 chooses among additional states that affect the operation of a processing block. For example, the D&R component 114 adjusts the value of a machine-trained model hyperparameter, controls the hardware sources that are used, controls what elements of a processing architecture are used, and/or controls the amount and/or type of context information that is considered.

### e) Additional Strategies to Reduce Model Size

The machine-trained model 102 of Fig. 1 is capable of incorporating additional provisions to reduce the number of parameters used by the machine-trained model 102. Two such examples are set forth below. Although not shown or described further below, a D&R component and an input update component are added to each processing block of each example (other than the last processing block) to incorporate the features of Sections A-C.

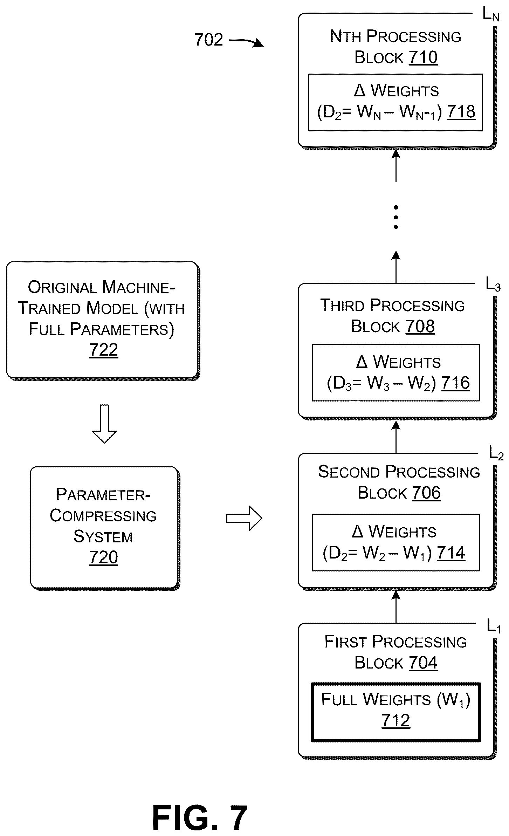

Fig. 7 shows a machine-trained model 702 that includes a sequence of processing blocks (704, 706, 708, ... 710). The processing blocks (704, 706, 708, ... 710) include respective instances of parameters (712, 714, 716, ..., 718) produced by a parameter-compressing system 720. In some implementations, the processing blocks (704, 706, 708, ... 710) perform the same function, although this is not necessary. For example, each processing block represents a transformer block in a transformer language model.

The first processing block 704 includes a full set of parameters *W*₁ that is not defined with respect to any other set of parameters. For each of the remaining sets of processing blocks, the parameter-compressing system 720 produces a set of difference-based parameters. For example, assume that the parameter-compressing system 720 produces the machine-trained model 102 based on an original machine-trained model 722 having processing blocks with respective full sets of parameters (*W*₁, *W*₂, *W*₃, ..., *Wₙ*). The parameter-compressing system 720 generates a set of difference-based parameters associated with a processing block at level k (other than the first processing block 704) that expresses the difference between its original full set (*Wₖ*) of parameters and the full set of parameters of its preceding processing block (*W*_{*k*-1}). For instance, the set of parameters *D*₂ for the second processing block 706 expresses the difference between its original set of full parameters *W*₂ and the full set of parameters *W*₁ of the first processing block 704.

In some implementations, a parameter-compressing system 720 further converts the parameters described above into a reduced-dimension form. In some implementations, the parameter-compressing system 720 performs this task using any low-rank information-reduction technique, including any of singular value decomposition (SVD), principal component analysis (PCA), linear discriminant analysis (LDA), etc. For example, SVD reduces an original *m* × *n* matrix A into a product of three smaller component matrices U, S, and V, as given by A = U * S * V^{T} (where T represents transposition). U and V are orthonormal matrices of sizes m × m and *rxn,* respectively, and S is a diagonal matrix of size *m* × *r*. The symbol *r* specifies the rank of matrix A.

The machine-trained model 702 has smaller-sized parameters compared to the original machine-trained model 722 and accordingly has a reduced size compared to the original machine-trained model 722. This makes it more feasible to store a machine-trained model 702 on a hard disk of a typical consumer computing device. For example, without compression, some language models consume well over 100B gigabytes of storage space. This makes it challenging for a typical consumer device (which, for instance, may have a capacity of one terabyte) to store a language model. Note, however, that the machine-trained model 702 may have more parameters than the original machine-trained model 722.

An execution system (not shown) executes the machine-trained model 102 by dynamically restoring each instance of reduced-dimension parameters to an associated full version of parameters on an on-needed basis in the course of performing computations. This operation involves summing plural sets of parameters at different levels. For example, assume that the task is to restore a full version of parameters for the third processing block 708. The execution system sums the instances of parameters associated with processing blocks 704, 706, and 708. For the particular case in which parameters have been reduced by SVD or some other technique, the above-described summation operations are preceded by operations in which the parameters are restored to their non-compressed form.

Additional details regarding the parameter-compressing system 720 are set forth in co-pending and commonly assigned patent application 18/922,468 (the '468 application) to Fayyaz, et al., filed October 22, 2024, and entitled "Model Compression using Weights that Express Differences between Model Parts." The '468 application is incorporated herein by reference in its entirety.

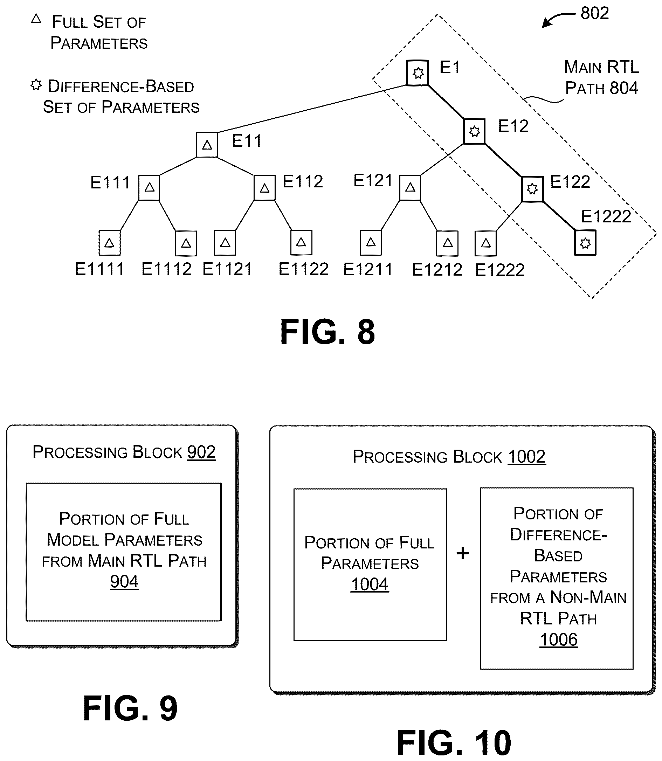

Fig. 8 shows another example in which a machine-trained model 802 includes a plurality of processing blocks arranged in a directed graph. In the particular example of Fig. 8, The directed graph is a hierarchical tree that includes a root node that represents a processing block E1 and child nodes that represent other processing blocks (E111, E1112, E1121, E1122, E1211, E1212, and E1222). A main root-to-leaf (RTL) path 804 provides a series of processing blocks associated with respective full sets of parameters. Other paths from the root node R1 to respective leaf nodes are referred to as non-RTL paths. Each processing block of a non-RTL path that is not also a member of the main RTL path 804 expresses its parameters as difference-based parameters, defined in relation to the full parameters of a corresponding processing block in the main RTL path 804. For example, the parameters of the processing block E121 are defined with respect to their difference from the parameters of the processing block E122 in the main RTL path 804. The processing blocks E121 and E122 are associated because they correspond to the same level of the machine-trained model 802.

An execution system (not shown) steps through the data structure shown in Fig. 8 along a particular path. For example, the execution system first executes a processing block E1. The execution system then executes the processing block E11 or E12, but not both. Assume that the execution system executes the processing block E12. The execution system then executes the processing block E121 or E122, but not both. This process continues until the execution system executes a processing block associated with a terminal (leaf) node of the tree, at which time the execution system provides a final output result.

Although not shown, the machine-trained model 802 includes instances of machine-trained decision and routing logic that control the kind of branching described above. For instance, the processing block E12 includes an instance of decision and routing logic that determines whether the processing block E121 or the processing block E122 should be invoked next. Once a decision is made, the decision and routing logic routes the output information produced by processing block E12 to the selected downstream processing block E121 or block E122.

The execution system executes a particular non-main RTL processing block (e.g., processing block E121) associated with an instance of difference-based parameters with reference to its corresponding full version of parameters in the main RTL path 804 (e.g., provided by processing block E122). To do this, the execution system combines the difference-based parameters with the corresponding full set of parameters. Parameter restoration or reconstruction, as the terms are used herein, occurs in the course of performing computations, and does not necessitate storing the full parameters in memory. In contrast, the execution system executes an instance of full parameters of a processing block in the main RTL path 804 without reference to the parameters of any other processing block.

Each instance of difference-based parameters is significantly smaller in size compared to its corresponding full portion of model parameters (once it is reconstituted). As a consequence, the machine-trained model 802 as a whole is significantly reduced in size, compared to the case in which all nodes associated with the machine-trained model are described by respective instances of full sets of parameters.

Fig. 9 shows a processing block 902 that executes a portion of full model parameters 904. Fig. 10 shows a processing block 1002 that executes a portion of full model parameters 1004 in conjunction with a portion of difference-based parameters 1006. For example, in some implementations, the processing block 1002 combines a first result produced using the instance of full model parameters 1004 with a second result produced using the portion of different-based parameters 1006. In other implementations, in advance of execution, the execution system combines the instance of full model parameters 1004 with the instance of difference-based parameters 1006, and then executes an operation using the resultant set of combined parameters.

Additional details regarding the parameter-compressing strategy of Figs. 8-10 are set forth in co-pending and commonly assigned patent application No. 18/232,465 (the '465 application), filed on August 10, 2023, to Fayyaz, et al., and entitled "Reducing Size of a Machine-Trained Model to Facilitate Storage and Transfer." The '465 application is incorporated herein by reference in its entirety.

Other implementations combine the compression strategy of Fig. 7 with the compression strategy of Figs. 8-10. For example, the parameters of the main RTL path 804 can be compressed using the strategy illustrated in Fig. 7.

The two examples set forth above with respect to Figs. 7-10 are non-exhaustive of the compression strategies that can be combined with the functionality described above in Sections A-C. Other compression strategies that can be used include, for example, pruning, quantization, etc. General background information on the topic of model size reduction can be found in Xu, et al., "A Survey on Model Compression and Acceleration for Pretrained Language Models," arXiv, arXiv:2202.07105v2 [cs.CL], November 29, 2022, 10 pages.

### E. Example of a Language Model

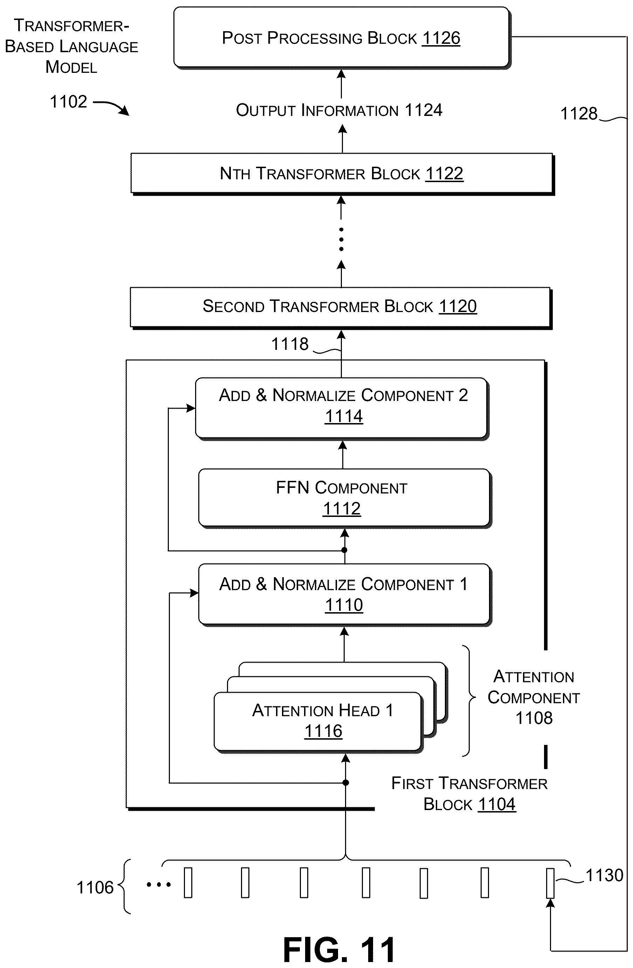

Fig. 11 shows a transformer language model ("language model") 1102 for implementing parts of the machine-trained model 102 of Fig. 1 or its variants described in Section D. The language model 1102 is composed, in part, of a pipeline of transformer blocks, including a first transformer block 1104. In the nomenclature of Fig. 1, the transformer blocks constitute the different processing blocks (104, 106, ... 108). Fig. 11 provides details regarding one way to implement the first transformer block 1104. Although not specifically illustrated, other transformer blocks of the language model 1102 have the same architecture and perform the same functions as the first transformer block 1104, but are governed by separate sets of parameters. Further note that the functionality associated with the D&R components and update components (of Fig. 1) is omitted from the description below.

The language model 1102 commences its operation with the receipt of input information, such as a passage of text. The prompt includes a series of linguistic tokens. In some examples, a "token" refers to a unit of text having any granularity, such as an individual word, a word fragment produced by byte pair encoding (BPE), a character n-gram, a word fragment identified by the WordPiece or SentencePiece algorithm, etc. To facilitate explanation, assume that each token corresponds to a complete word. The principles set forth herein, however, are not limited to the processing of text information; in other examples, the language model 1102 operates on any of: audio information, image information, video information, sensor information, and so on, or any combination thereof.

Next, an embedding component (not shown) maps the sequence of tokens into respective token embeddings. For example, the embedding component produces one-hot vectors that describe the tokens, and then maps the one-hot vectors into the token embeddings using a machine-trained transformation. The embedding component then adds position information (and, in some cases, segment information) to the respective token embeddings to produce position-supplemented embedding vectors 1106. The position information added to each token embedding describes the embedding vector's position in the sequence of token embeddings. Note that embeddings (which are distributed vectors) are also referred to as tokens herein. In this broadened context, a "token" is a piece of information that assumes different forms at different stages in the processing performed by a machine-trained model.

The first transformer block 1104 operates on the position-supplemented embedding vectors 1106. In some implementations, the first transformer block 1104 includes, in order, an attention component 1108, a first add-and-normalize component 1110, a feed-forward neural network (FFN) component 1112, and a second add-and-normalize component 1114.

The attention component 1108 determines how much emphasis should be placed on parts of input information when interpreting other parts of the input information. The attention component 1108 performs attention analysis using the following equation: $Attention \left(Q, K, V\right) = softmax \left(\frac{{QK}^{T}}{\sqrt{{d}_{k}}}\right) V$

The attention component 1108 produces query information *Q* by linearly projecting the position-supplemented embedding vectors 1106 using a query weighting matrix *W^{Q}*. Similarly, the attention component 1108 produces key information *K* and value information *V* by linearly projecting the position-supplemented embedding vectors 1106 using a key weighting matrix *W^{K}* and a value weighting matrix *W^{V},* respectively. To execute Equation (2), the attention component 1108 takes the product of *Q* with the transpose of *K,* and then divides the product by a scaling factor $\sqrt{d}$, to produce a scaled result. The symbol d represents the dimensionality of *Q* and *K.* The attention component 1108 takes the Softmax (normalized exponential function) of the scaled result, and then multiplies the result of the Softmax operation by *V,* to produce attention output information. In some cases, the attention component 1108 is said to perform masked attention insofar as the attention component 1108 masks output token information that, at any given time, has not yet been determined. Background information regarding the general concept of attention is provided in Vaswani, et al., "Attention Is All You Need," in 31st Conference on Neural Information Processing Systems (NIPS 2017), 2017, 11 pages.

Note that Fig. 11 shows that the attention component 1108 is composed of plural attention heads, including a representative attention head 1116. Each attention head performs the computations specified by Equation (2), but with respect to a particular representational subspace that is different than the subspaces of the other attention heads. To accomplish this operation, the attention heads perform the computations described above using different respective sets of query, key, and value weight matrices. Although not shown, the attention component 1108 concatenates the output results of the attention component's separate attention heads, and then multiplies the results of this concatenation by another weight matrix *W^{O}*.

The add-and-normalize component 1110 includes a residual connection that combines (e.g., sums) input information fed to the attention component 1108 with the output information generated by the attention component 1108. The add-and-normalize component 1110 then normalizes the output information generated by the residual connection, e.g., by normalizing values in the output information based on the mean and standard deviation of those values, or by performing root-mean-squared normalization. The other add-and-normalize component 1114 performs the same functions as the first-mentioned add-and-normalize component 1110. The FFN component 1112 transforms input information to output information using a feed-forward neural network having any number of layers.

The first transformer block 1104 produces output information 1118. A series of other transformer block (1120, ..., 1122) perform the same functions as the first transformer block 1104, each operating on output information produced by its immediately preceding transformer block. Each transformer block uses its own level-specific set of machine-trained parameters. The final transformer block 1122 in the language model 1102 produces final output information 1124.

In some implementations, a post-processing component 1126 performs post-processing operations on the final output information 1124. For example, the post-processing component 1126 performs a machine-trained linear transformation on the final output information 1124, and processes the results of this transformation using a Softmax component (not shown). The language model 1102 uses the output of the post-processing component 1126 to predict the next linguistic token in the input sequence of tokens. In some applications, the language model 1102 performs this task using a greedy selection approach (e.g., by selecting the token having the highest probability), or by using the beam search algorithm (e.g., by traversing a tree that expresses a search space of candidate next tokens).

In some implementations, the language model 1102 operates in an autoregressive manner, as indicated by the loop 1128. To operate in this way, the language model 1102 appends a predicted linguistic token to the end of the sequence of input tokens, to provide an updated sequence of tokens. (Although not shown, any thought tokens produced in the prior pass are also appended to the sequence of input tokens.) The predicted token leads to the production of a new position-supplemented vector 1130. In a next pass, the language model 1102 processes the updated sequence of position-supplemented vectors to generate a next predicted linguistic token. The language model 1102 repeats the above process until it generates a specified stop token.

The above-described implementation of the language model 1102 relies on a decoder-only architecture. Other implementations of the language model 1102 use an encoder-decoder transformer-based architecture. Here, a transformer-based decoder receives encoder output information produced by a transformer-based encoder, together with decoder input information.

Other implementations of the machine-trained model 102 use other types or combination of types of neural networks, including convolutional neural networks, recurrent neural networks, feed-forward neural networks, diffusion models, selective state space models (e.g., Mamba models), and so on.

### E. Illustrative Processes

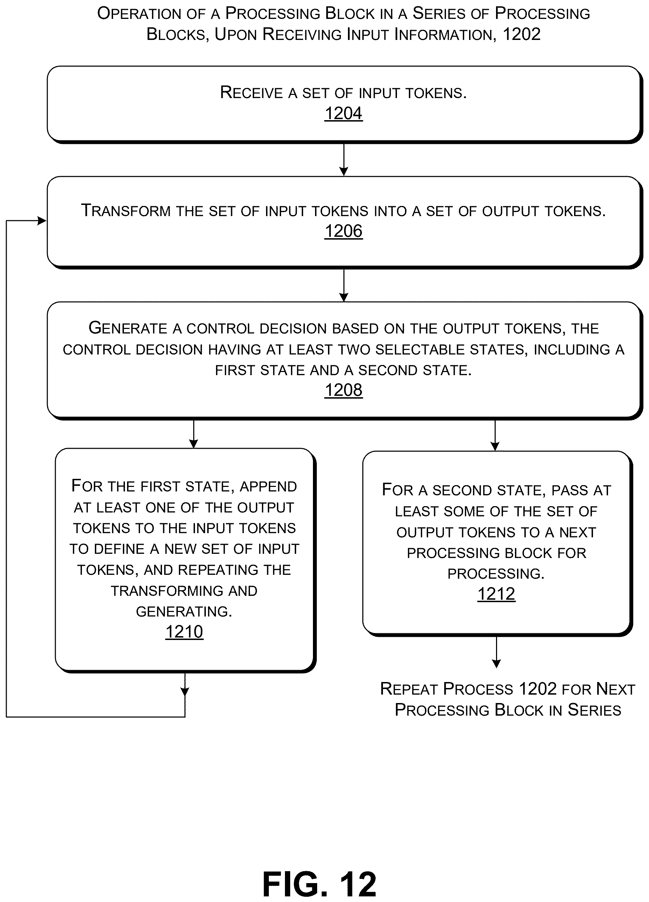

Fig. 12 shows a process 1202 that represents an overview of the operation of the machine-trained model 102 of Fig. 1. The process 1202 is expressed as a series of operations performed in a particular order. But the order of these operations is merely representative, and the operations are capable of being varied in other implementations. Further, any two or more operations described below are capable of being performed in a parallel manner. In one implementation, the blocks shown in the process 1202 that pertain to processing-related functions are implemented by the computing equipment described in connection with Figs. 13-15.

More specifically, Fig. 12 shows a process 1202 for processing input information using a machine-trained model (e.g., the machine-trained model 102), framed from the perspective of processing performed by a particular processing block in a series of processing blocks other than the last processing block 108. Assume that machine-trained model as a whole operates on received input information.

In block 1204, the processing block receives a set of input tokens. In block 1206, the processing block transforms the set of input tokens into a set of output tokens. In block 1208, the processing block generates a control decision based on the output tokens, the control decision having at least two selectable states, including a first state and a second state. In the example of Fig. 4, the control decision specifically makes a decision based on the last-generated output control token in the output tokens. In block 1210, for the first state, the processing block appends at least one of the output tokens to the input tokens to define a new set of input tokens, and repeats the transforming and generating of blocks 1206 and 1208. In block 1212, for the second state, passes at least some of the set of output tokens to a next processing block for processing.

Consider a first query having a first complexity and a second query having a second complexity, where the second complexity is greater than the first complexity. (The D&R component 114 is the empirical arbiter of whether a query is complex or not, which, in turn, depends on the machine-trained parameters that make up the machine-trained model 102. A decision to repeat an iteration for a token being predicted is tantamount to identifying a token-generating task as complex.) The process 1202 of Fig. 12 will perform a first number of total transforming operations using a first amount of resources for the first query, and a second a number of total transforming operations using a second amount of resources for the second query. The first number of total transforming operations is less than the second number of transforming operations, and the first amount of resources is less than the second amount of resources.

A number of environment-specific factors will determine the amount of additional processing operations that are performed for a complex query relative to an easy query. One factor is the level of complexity of the training examples on which the machine-trained model 102 has been trained. In some examples, the processing of typical complex queries involves a multiple of *α* > 1 as many iterations as are performed for easy queries, e.g., wherein *α* is 1.5, 2.0, 2.5, 3.0, etc. Each repeated iteration consumes processor resources but need not require reloading parameters used in a prior iteration, which have been cached.

### F. Illustrative Computing Systems

Fig. 13 shows one or more computing devices 1302 (referred to in the singular below) for implementing the machine-trained model 102. The computing device(s) 1302 includes storage device(s) 1304, memory 1306, and one or more processors 1308. The storage device(s) 1304 and memory 1306 store parameters of the machine-trained model 102. The strategies described in Sections A-D reduce the number of parameters that need to be stored and then retrieved at runtime, relative to a machine-trained that does not use these strategies.

Fig. 14 shows computing equipment 1402 that, in some implementations, is used to implement the machine-trained model 102 and/or the training system 120. The computing equipment 1402 includes a set of local devices 1404 coupled to a set of servers 1406 via a computer network 1408. Each local device corresponds to any type of computing device, such as any type of portable or stationary user computing device. In some implementations, the computer network 1408 is implemented as a local area network, a wide area network (e.g., the Internet), one or more point-to-point links, or any combination thereof.

The bottom-most overlapping box in Fig. 14 indicates that the machine-trained model 102 is capable of being spread across the local devices 1404 and/or the servers 1406 in any manner. In one example, the machine-trained model 102 is entirely implemented by a local device. In another example, the machine-trained model 102 is entirely implemented by the servers 1406. Here, a user is able to interact with the servers 1406 via a browser application running on a local device. In other examples, some operations of the machine-trained model 102 are implemented by a local device, and other operations of the machine-trained model 102 are implemented by the servers 1406. The same applies to the training system 120, meaning that it can be entirely implemented in local fashion by a local device, or can be entirely implemented by the servers 1406, or can be implemented in distributed fashion by both a local device and the servers 1406.

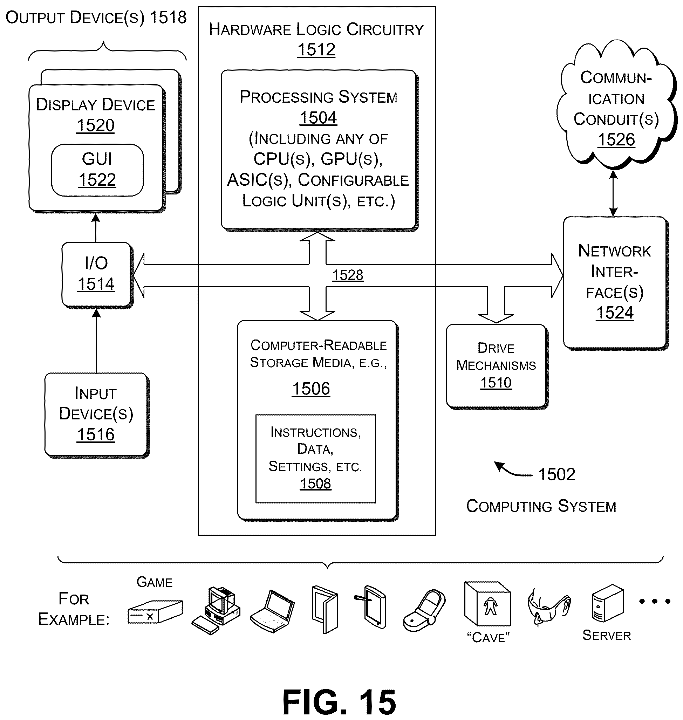

Fig. 15 shows a computing system 1502 that, in some implementations, is used to implement any aspect of the mechanisms set forth in the above-described figures. For instance, in some implementations, the type of computing system 1502 shown in Fig. 15 is used to implement any local computing device or any server shown in Fig. 14. In all cases, the computing system 1502 represents a physical and tangible processing mechanism.

The computing system 1502 includes a processing system 1504 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 1502 also includes computer-readable storage media 1506, corresponding to one or more computer-readable media hardware units. The computer-readable storage media 1506 retains any kind of information 1508, such as machine-readable instructions, settings, model parameters, and/or other data. In some implementations, the computer-readable storage media 1506 includes one or more solid-state devices, one or more hard disks, one or more optical disks, etc. Any instance of the computer-readable storage media 1506 represents a fixed or removable unit of the computing system 1502. Further, any instance of the computer-readable storage media 1506 provides volatile and/or non-volatile retention of information. The specific term "computer-readable storage medium" or "storage device" expressly excludes propagated signals per se in transit; a computer-readable storage medium or storage device is "non-transitory" in this regard.

The computing system 1502 utilizes any instance of the computer-readable storage media 1506 in different ways. For example, in some implementations, any instance of the computer-readable storage media 1506 represents a hardware memory unit (such as random access memory (RAM)) for storing information during execution of a program by the computing system 1502, and/or a hardware storage unit (such as a hard disk) for retaining/archiving information on a more permanent basis. In the latter case, the computing system 1502 also includes one or more drive mechanisms 1510 (such as a hard drive mechanism) for storing and retrieving information from an instance of the computer-readable storage media 1506.

In some implementations, the computing system 1502 performs any of the functions described above when the processing system 1504 executes computer-readable instructions stored in any instance of the computer-readable storage media 1506. For instance, in some implementations, the computing system 1502 carries out computer-readable instructions to perform each block of the process 1202 described with reference to Fig. 12. Fig. 15 generally indicates that hardware logic circuitry 1512 includes any combination of the processing system 1504 and the computer-readable storage media 1506.

In addition, or alternatively, the processing system 1504 includes one or more other configurable logic units that perform operations using a collection of logic gates, such as field-programmable gate arrays (FPGAs), etc. In these implementations, the processing system 1504 effectively incorporates a storage device that stores computer-readable instructions, insofar as the configurable logic units are configured to execute the instructions and therefore embody or store these instructions.

In some cases (e.g., in the case in which the computing system 1502 represents a user computing device), the computing system 1502 also includes an input/output interface 1514 for receiving various inputs (via input devices 1516), and for providing various outputs (via output devices 1518). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 1520 and an associated graphical user interface presentation (GUI) 1522. The display device 1520 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 1502 also includes one or more network interfaces 1524 for exchanging data with other devices via one or more communication conduits 1526. One or more communication buses 1528 communicatively couple the above-described units together.

The communication conduit(s) 1526 is implemented in any manner, e.g., by a local area computer network, a wide area computer network (e.g., the Internet), point-to-point connections, or any combination thereof. The communication conduit(s) 1526 include any combination of hardwired links, wireless links, routers, gateway functionality, name servers, etc., governed by any protocol or combination of protocols.

Fig. 15 shows the computing system 1502 as being composed of a discrete collection of separate units. In some cases, the collection of units corresponds to discrete hardware units provided in a computing device chassis having any form factor. Fig. 15 shows illustrative form factors in its bottom portion. In other cases, the computing system 1502 includes a hardware logic unit that integrates the functions of two or more of the units shown in Fig. 15. For instance, in some implementations, the computing system 1502 includes a system on a chip (SoC or SOC), corresponding to an integrated circuit that combines the functions of two or more of the units shown in Fig. 15.

The following summary provides a set of illustrative examples of the technology set forth herein.

(A1) Accord to a first aspect, a method (e.g., the process 1202) is described for processing input information using a machine-trained model (e.g., the machine-trained model 102). The method includes receiving the input information and processing the input information using the machine-trained model. The machine-trained model includes a series of processing blocks (e.g., the processing blocks 104, 106, ..., 108). A particular processing block of the series of processing blocks performs operations of: receiving (e.g., in block 1204) a set of input tokens; transforming (e.g., in block 1206) the set of input tokens into a set of output tokens; and generating (e.g., in block 1208) a control decision based on the output tokens, the control decision having at least two selectable states, including a first state and a second state. For the first state, the method appends (e.g., in block 1210) at least one of the output tokens to the input tokens to define a new set of input tokens, and repeats the transforming and generating. For the second state, the process 1202 passes (e.g., in block 1212) at least some of the set of output tokens to a next processing block for processing.

(A2) According to some aspects of the method of A1, the method performs a first number of total transforming operations using a first amount of resources for a first query having a first complexity. The method performs a second number of total transforming operations using a second amount of resources for a second query having a second complexity. The first complexity level is less than the second complexity level, the first number of total transforming operations is less than the second number of total transforming operations, and the first amount of resources is less than the second amount of resources.

(A3) According to some aspects of the methods of A1 or A2, the machine-trained model is a transformer language model, and the plural processing blocks are plural transformer processing blocks.

(A4) According to some aspects of any of the methods A1-A3, the set of input tokens that is fed to the particular processing block includes first input tokens that originate from the input information and a second input token that serves as an input control token. The set of output tokens produced by the transforming includes first output tokens that are transformed counterparts of the first input tokens and a second output token that is a transformed counterpart of the second input token. Further, the second the second output token expresses information that is supplemental to information expressed by the first output tokens.

(A5) According to some aspects of the method of A4, the generating a control decision is based on the second output token.

(A6) According some aspects of the methods of A4 or A5, for the first state, the at least one of the output tokens that is appended to the input set of tokens includes the second output token, whereupon the second output token assumes a role as a next input control token in a next iteration of the transforming and generating.

(A7) According to some aspects of any of the methods A4-A6, for the second state, the at least some of the set of output tokens that are passed to the next processing block include one or more instances of the second output token that have been generated in one or more respective iterations of the transforming and generating.

(A8) According to some aspects of the method of A7, the one or more instances of the second output token excludes an instance of the second output token on which a control decision to cease iterating the transforming and generating is based.

(A9) According to some aspects of any of the methods A4-A8, the second output token embodies information that is inexpressible in linguistic tokens.

(A10) According to some aspects of any of the methods A4-A9, the second output token expresses information that lies outside a vector space of concepts that are directly expressible using linguistic tokens.

(A11) According to some aspects of any of the methods A4-A10, the input control token that is provided to the particular processing block has a value that is produced in a machine-training process.

(A12) According to some aspects of any of the methods A1-A11, the machine-trained model includes parameters that are trained using a loss function that rewards agreement between model-generated responses and ground-truth responses, and penalizes repetition of transformation operations.

(A13) According to some aspects of any of the methods A1-A12, the generating a control decision is also based on an assessed resource capability of a computing device that executes the machine-trained model.

(A14) According to some aspects of any of the methods of A1-A13, the method further includes predicting, in a last processing block in the series of processing blocks, a linguistic token. The method further includes appending the predicted linguistic token to a prior sequence of linguistic tokens that were processed by the machine-trained model, together with any control tokens generated in a prior pass through the machine-trained model.

(B1) According to another aspect, another method is described for processing input information using a machine-trained model (e.g., the machine-trained model 102). The method differs from A1 by including operations of: assessing complexity of information expressed in the set of input tokens; and generating a control decision based on the complexity that is assessed, the control decision having the same two selectable states of A1.

In yet another aspect, some implementations of the technology described herein include a computing system (e.g., the computing system 1502) that includes a processing system (e.g., the processing system 1504) having a processor. The computing system also includes a storage device (e.g., the computer-readable storage media 1506) for storing computer-readable instructions (e.g., the information 1508). The processing system executes the computer-readable instructions to perform any of the methods described herein (e.g., any individual method of the methods of A1-A14 and B1).

In yet another aspect, some implementations of the technology described herein include a computer-readable storage medium (e.g., the computer-readable storage media 1506) for storing computer-readable instructions (e.g., the information 1508). A processing system (e.g., the processing system 1504) executes the computer-readable instructions to perform any of the operations described herein (e.g., the operations in any individual method of the methods of A1-A14 and B1.

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any features described as alternative ways of carrying out identified functions or implementing identified mechanisms are also combinable together in any combination, unless otherwise noted.

In terms of specific terminology, the phrase "configured to" encompasses various physical and tangible mechanisms for performing an identified operation. The mechanisms are configurable to perform an operation using the hardware logic circuitry 1512 of Fig. 15. The term "logic" likewise encompasses various physical and tangible mechanisms for performing a task. For instance, each processing-related operation illustrated in the flowchart of Fig. 12 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. The term "prescribed" is used to designate that something is purposely chosen according to any environment-specific considerations. For instance, a threshold value or state is said to be prescribed insofar as it is purposely chosen to achieve a desired result. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. For example, the functionality is configurable to allow a user to expressly opt in to (and then expressly opt out of) the provisions of the functionality. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

This application claims priority from US application 19/067,898 filed on March 01, 2025, the entire contents of which are herein incorporated by reference. Further arrangements of the specification as set out in the following numbered clauses.
1. A method for processing input information using a machine-trained model, comprising: receiving the input information; processing the input information using the machine-trained model, the machine-trained model including a series of processing blocks, a particular processing block of the series of processing blocks performing operations of: receiving a set of input tokens; transforming the set of input tokens into a set of output tokens; generating a control decision based on the output tokens, the control decision having at least two selectable states, including a first state and a second state; for the first state, appending at least one of the output tokens to the input tokens to define a new set of input tokens, and repeating the transforming and generating; and for the second state, passing at least some of the set of output tokens to a next processing block for processing.
2. The method of clause 1, wherein the method performs a first number of total transforming operations using a first amount of resources for a first query having a first complexity, wherein the method performs a second number of total transforming operations using a second amount of resources for a second query having a second complexity, the first complexity level being less than the second complexity level, the first number of total transforming operations being less than the second number of total transforming operations, and the first amount of resources being less than the second amount of resources.
3. The method of clause 1, wherein the machine-trained model is a transformer language model, and wherein the plural processing blocks are plural transformer processing blocks.
4. The method of clause 1, wherein the set of input tokens that is fed to the particular processing block includes first input tokens that originate from the input information and a second input token that serves as an input control token, wherein the set of output tokens produced by the transforming includes first output tokens that are transformed counterparts of the first input tokens and a second output token that is a transformed counterpart of the second input token, and wherein the second output token expresses information that is supplemental to information expressed by the first output tokens.
5. The method of clause 4, wherein the generating a control decision is based on the second output token.
6. The method of clause 4, wherein, for the first state, said at least one of the output tokens that is appended to the input set of tokens includes the second output token, whereupon the second output token assumes a role as a next input control token in a next iteration of the transforming and generating.
7. The method of clause 4, wherein, for the second state, said at least some of the set of output tokens that are passed to the next processing block include one or more instances of the second output token that have been generated in one or more respective iterations of the transforming and generating.
8. The method of clause 7, wherein the one or more instances of the second output token excludes an instance of the second output token on which a control decision to cease iterating the transforming and generating is based.
9. The method of clause 4, wherein the second output token embodies information that is inexpressible in linguistic tokens.
10. The method of clause 4, wherein the second output token expresses information that lies outside a vector space of concepts that are directly expressible using linguistic tokens.
11. The method of clause 4, wherein the input control token that is provided to the particular processing block has a value that is produced in a machine-training process.
12. The method of clause 1, wherein the machine-trained model includes parameters that are trained using a loss function that rewards agreement between model-generated responses and ground-truth responses, and penalizes repetition of transformation operations.
13. The method of clause 1, wherein the generating a control decision is also based on an assessed resource capability of a computing device that executes the machine-trained model.
14. The method of clause 1, wherein the method further includes predicting, in a last processing block in the series of processing blocks, a linguistic token, and wherein the method further includes appending the predicted linguistic token to a prior sequence of linguistic tokens that were processed by the machine-trained model, together with any control tokens generated in a prior pass through the machine-trained model.
15. A computing system for processing input information in a machine-trained model, comprising: a data store for storing computer-readable instructions; and a processing system for executing the computer-readable instructions in the instruction data store, to perform operations including: receiving the input information; processing the input information using the machine-trained model, the machine-trained model including a series of processing blocks, a particular processing block of the series of processing blocks performing operations of: receiving a set of input tokens; transforming the set of input tokens into a set of output tokens; assessing complexity of information expressed in the set of input tokens; generating a control decision based on the complexity that is assessed, the control decision having at least two selectable states, including a first state and a second state; for the first state, appending at least one of the output tokens to the input tokens to define a new set of input tokens, and repeating the transforming and generating; and for the second state, passing at least some of the set of output tokens to a next processing block for processing.
16. The computing system of clause 15, wherein the set of input tokens that is fed to the particular processing block includes first input tokens that originate from the input information and a second input token that serves as an input control token, wherein the set of output tokens produced by the transforming includes first output tokens that are transformed counterparts of the first input tokens and a second output token that is a transformed counterpart of the second input token, and wherein the second output expresses information that lies outside a vector space of concepts that are directly expressible using linguistic tokens.
17. The computing system of clause 16, wherein the assessing complexity and generating a control decision are based on the second output token.
18. The computing system of clause 16, wherein, for the first state, said at least one of the output tokens that is appended to the input set of tokens includes the second output token, whereupon the second output token assumes a role as a next input control token in a next iteration of the transforming and generating, and wherein, for the second state, said at least some of the set of output tokens that are passed to the next processing block include one or more instances of the second output token that have been generated in one or more respective iterations of the transforming and generating.
19. The computing system of clause 14, wherein the machine-trained model includes parameters that are trained using a loss function that rewards agreement between model-generated responses and ground-truth responses, and penalizes repetition of transformation operations.
20. A computer-readable storage medium for storing computer-readable instructions, a processing system executing the computer-readable instructions to perform operations, the operations comprising: receiving input information; processing the input information using a machine-trained model including a series of processing blocks, a particular processing block of the series of processing blocks performing operations of: receiving a set of input tokens, the set of input tokens including first input tokens that originate from the input information and a second input token that serves as an input control token; transforming the set of input tokens into a set of output tokens, wherein the set of output tokens produced by the transforming includes first output tokens that are transformed counterparts of the first input tokens and a second output token that is a transformed counterpart of the second input token, the second output token conveying supplemental information to the first output tokens; generating a control decision based on the second output token, the control decision having at least two selectable states, including a first state and a second state; for the first state, appending the second output token to the input tokens to define a new set of input tokens, and repeating the transforming and generating; and for a second state, passing one or more instances of the second output token produced over one or more iterations of the transforming to a next processing block for processing.

## Claims

1. A method (1202) for processing input information using a machine-trained model (102), comprising:
receiving the input information;
processing the input information using the machine-trained model (102), the machine-trained model (102) including a series of processing blocks (104, 106, ..., 108), a particular processing block of the series of processing blocks (104, 106, ..., 108) performing operations of:
receiving (1204) a set of input tokens;
transforming (1206) the set of input tokens into a set of output tokens;
generating (1208) a control decision based on the output tokens, the control decision having at least two selectable states, including a first state and a second state;
for the first state, appending (1210) at least one of the output tokens to the input tokens to define a new set of input tokens, and repeating the transforming and generating; and
for the second state, passing (1212) at least some of the set of output tokens to a next processing block for processing.

2. The method of claim 1,
wherein the method performs a first number of total transforming operations using a first amount of resources for a first query having a first complexity,
wherein the method performs a second number of total transforming operations using a second amount of resources for a second query having a second complexity,
the first complexity level being less than the second complexity level, the first number of total transforming operations being less than the second number of total transforming operations, and the first amount of resources being less than the second amount of resources.

3. The method of claim 1, wherein the machine-trained model is a transformer language model, and wherein the plural processing blocks are plural transformer processing blocks.

4. The method of claim 1,
wherein the set of input tokens that is fed to the particular processing block includes first input tokens that originate from the input information and a second input token that serves as an input control token,
wherein the set of output tokens produced by the transforming includes first output tokens that are transformed counterparts of the first input tokens and a second output token that is a transformed counterpart of the second input token, and
wherein the second output token expresses information that is supplemental to information expressed by the first output tokens.

5. The method of claim 4, wherein the generating a control decision is based on the second output token.

6. The method of claim 4, wherein, for the first state, said at least one of the output tokens that is appended to the input set of tokens includes the second output token, whereupon the second output token assumes a role as a next input control token in a next iteration of the transforming and generating.

7. The method of claim 4, wherein, for the second state, said at least some of the set of output tokens that are passed to the next processing block include one or more instances of the second output token that have been generated in one or more respective iterations of the transforming and generating.

8. The method of claim 7, wherein the one or more instances of the second output token excludes an instance of the second output token on which a control decision to cease iterating the transforming and generating is based.

9. The method of claim 4, wherein the second output token expresses information that lies outside a vector space of concepts that are directly expressible using linguistic tokens.

10. The method of claim 4, wherein the input control token that is provided to the particular processing block has a value that is produced in a machine-training process.

11. The method of claim 1, wherein the machine-trained model includes parameters that are trained using a loss function that rewards agreement between model-generated responses and ground-truth responses, and penalizes repetition of transformation operations.

12. The method of claim 1, wherein the generating a control decision is also based on an assessed resource capability of a computing device that executes the machine-trained model.

13. The method of claim 1,
wherein the method further includes predicting, in a last processing block in the series of processing blocks, a linguistic token, and
wherein the method further includes appending the predicted linguistic token to a prior sequence of linguistic tokens that were processed by the machine-trained model, together with any control tokens generated in a prior pass through the machine-trained model.

14. A processing system having a processor and a storage device that is configured to perform the computer-implemented method according to any of claims 1-13.

15. A computer-readable storage medium for storing computer-readable instructions that, when executed by a processing system, perform the computer-implemented method according to any of claims 1-13.
